# EUROPÄISCHE PATENTSCHRIFT

(11) **EP 0 699 515 B1**
(45) Veröffentlichungstag und Bekanntmachung des Hinweises auf die Patenterteilung: **02.02.2000**
(21) Anmeldenummer: 95113499.8
(22) Anmeldetag: 28.08.1995
(51) Int. Cl.: B29C 65/78, B29C 65/00, B29D 30/58, B29D 30/52

(54) **Verfahren zum Zusammenfügen von Materialenden bei Materialbahnen**
Method of joining the ends of lengths of material
Procédé de jonction des extrémités de matériaux en feuille

(30) Priorität: 30.08.1994 DE 4430703
(43) Veröffentlichungstag der Anmeldung: 06.03.1996
(73) Patentinhaber: Continental Aktiengesellschaft, 30165 Hannover (DE)
(72) Erfinder: Sergel, Horst, D-30657 Hannover (DE); Brandes, Gerd, D-30966 Hemmingen (DE)

(56) Entgegenhaltungen:
- DE-A- 4 035 708
- FR-A- 2 225 277
- GB-A- 2 127 342
- US-A- 2 690 785

## Beschreibung

Die Erfindung betrifft ein Verfahren zum Zusammenfügen von Materialenden bei Materialbahnen aus Gummi oder gummiähnlichen Kunststoffen mit dünnen Querschnittsbereichen, insbesondere dünnen Materialkanten in Form von Spitz auslaufenden Seiten Kanten, sowie eine Vorrichtung zur Durchführung des Verfahrens.

Bei der Reifenherstellung ist es häufig erforderlich, Materialbahnen mit dünnen Materialkanten auf einer Wickeltrommel zu einem geschlossenen Ring zusammenzufügen. Dabei wird die Materialbahn mittels eines Trennschnitts auf eine gewünschte Länge geschnitten und in der Weise auf die Wickeltrommel gelegt, daß sich die Enden der Materialbahn in definierter Weise überlappen. Hierbei müssen jedoch Materialanhäufungen im Überlappungsbereich vermieden werden, um keine Unwuchten am fertigen Reifen hervorzurufen. Unter Überlappungslänge wird das Maß der Überlappung der beiden Enden der Materialbahn beim Zusammenfügen verstanden, das aufgrund eines Schrägschnitts (schräg zur Oberfläche) der beiden Enden beim Zusammenfügen entsteht, ohne daß es an der Fügestelle zu einer Materialverdickung kommt. Nach dieser Definition würde bei vertikalen Schnitten ein stumpfer Stoß mit einer Überlappungslänge 0 erzeugt werden, während mit zunehmendem Schrägschnitt die Überlappungslänge zunimmt.

Ebenfalls ist ohne weiteres ersichtlich, daß die Überlappungslänge in Querschnittsbereichen mit Größerer Materialdicke größer ist als in dünneren Bereichen.

In der Praxis besteht das Problem, daß die Materialbahn in Abhängigkeit von der Gummiqualität der unvulkanisierten Kautschukmischung in Bereichen dünner Zonen an dem geschnittenen Ende mehr oder weniger stark zurückspringt, so daß ein gleichmäßiges Zusammenfügen der Enden erschwert wird, was vor allem eine Unsicherheit der Splicehaltbarkeit in den Bereichen dünner Zonen hervorruft. Der Reifenwickler kann zwar versuchen beim Zusammenfügen der Bahnenden das zuletzt auflaufende Ende manuell in den gefährdeten dünnen Bereichen zu strecken. Doch führt dies um einen zu ungleichmäßigen Fügungen, zum anderen besteht das Hauptproblem nicht an diesem Ende der Materialbahn, sondern an dem zuerst geschnittenen und zuerst aufgelegten.

Die GB-A-2127342 offenbart eine Vorrichtung zum Verbinden von Materialenden eines auf eine Aufbautrommel aufzulegenden streifenförmigen Gummimaterials, bei der das streifenförmige Gummimaterial kontinuierlich aus einem Zufuhrspeicner abgezogen und auf die Aufbautrommel aufgelegt wird und bei der die nach einem Schnitt entstehenden Rückzugs- oder Kontraktionseffekte des Gummimaterials dadurch vermieden werden, daß am vorderen Ende des aufzulegenden Materials über eine Klemmeneinrichtung 5 eine Klemmung der Randbereiche des Streifenmaterials erfolgt, wonach die dort wirkenden Klemmen zur Dehnung in Richtung auf die Aufbautrommel zubewegt werden können, während am gegenüberliegenden hinteren Ende eine im wesentlichen mittig angreifende Bremsrolleneinrichtung 6 den Materialstreifen festhält.

Die so erzeugte Dehnung des Materials bzw. der Randbereiche erstreckt und vergleichmäßigt sich somit über die gesamte aufzulegende Länge des Streifens, wodurch sich eine ungünstige und nicht vorhersehbare Verteilung der Streckung auf die Gesamtlänge ergibt, die z.B. bei durch Toleranzschwankungen bedingten dünneren Stellen zu einer partiellen Überstreckung führen kann, so daß letztlich eine ungleichmäßige Auflage des Materialstreifens auf der Trommel möglich ist.

Die DE-A-4035708 offenbart demgegenüber eine Vorrichtung, bei der sich zwar die Nachteile eines sich über die gesamte Länge der Materialbahn erstreckenden Spannungszustandes dadurch vermeiden lassen, daß zwischen den dortigen Klemmen 29, die die mittleren Teile der Materialbahn fixieren und den Klemmen 109, die die äußeren verdünnten Bereiche der Materialbahn strecken, kein all zu großer Abstand vorhanden ist, jedoch zeigt sich hierbei der Nachteil, daß die gesamte Streckung an das hintere Ende der Materialbahn verlegt wird, wodurch die Klemmvorrichtung als solche solange zur Erhaltung des Spannungszustandes geklemmt bleiben muß, bis das hintere Ende auf die Aufbautrommel aufgerollt ist.Hierzu ist der Aufbau der Vorrichtung notwendigerweise mit vielen Führungselementen so zu gestalten, daß der gesamte rückwärtige Klemm- und Spannteil bis an die Aufbautrommel verfahren werden kann.

Der Erfindung liegt die Aufgabe zugrunde, bei einem Verfahren der eingangs genannten Art einen Stoß großer Haltbarkeit auch in dünnen Materialzonen mit reproduzierbarer Qualität zu erzeugen.

Diese Aufgabe wird erfindungsgemäß dadurch gelöst, daß zumindest das zuerst mit einem Trennschnitt versehene Materialende möglichst kurz vor der Stoßzusammensetzung der beiden Enden in den Bereichen verdünnter Wandstärke um ein definiertes Maß vorgereckt wird, wobei das zuerst mit einem Trennschnitt versehene Materialende in den Bereichen der Seitenkanten um bis zu 4 mm vorgereckt wird, und daß anschließend die Stoßzusammensetzung der beiden Enden unter Fixierung des vorgereckten Endes mit zusätzlichen Überlappungslängen in den beiden Bereichen der Seitenkanten erfolgt. Eine Vorrichtung zur Durchführung des Verfahrens mit mehreren Elementen zum Erfassen des vorderen Endes einer Materialbahn an verschiedenen Stellen in Querrichtung der Bahn ist dadurch gekennzeichnet, daß zumindest die Elemente zum Erfassen der Materialbahn in den dünnen Querschnittsbereichen als Kraftübertragungselemente steuerbar und untereinander unterschiedlich weit in Längsrichtung der Materialbahn verschiebbar sind.

Der kerngedanke der Erfindung besteht darin, das zuerst mit einem Trennschnitt versehene Materialende, das am stärksten zu einem Zurückspringen der Bereiche verdünnter Wandstärke neigt, in diesen Bereichen vorzurecken, so daß beim Zusammenfügen der Enden in diesen Bereichen eine zusätzliche Überlappungslänge erzeugt wird.

Mit der Erfindung werden in vorteilhafter Weise ungewollte Materialüberlappungen und damit verbundene Wandverdickungen vermieden. Es sind weiterhin keine manuellen Korrekturen im Bereich der Stöße erforderlich. Die Erfindung ist bestens dazu geeignet in einen automatischen Fertigungsablauf bei der Reifenherstellung integriert zu werden. Die Erfindung ist nicht nur beim Zusammenfügen der Enden einer Materialbahn zu einem geschlossenen Ring anwendbar, sondern auch beim Zusammenfügen zweier Materialbahnenden in einer Ebene.

Hiernach wird das Verfahren bei einer Materialbahn mit spitz auslaufenden Seitenkanten angewandt, wobei das zuerst mit einem Trennschnitt versehene Materialende in den Seitenkanten um bis zu 4 mm vorgereckt wird, so daß sich bei der Stoßzusammensetzung in den beiden Bereichen der Seitenkanten eine zusätzliche Überlappungslänge ergibt. Da der in Querrichtung der Materialbahn anzubringende Trennschnitt eine gewisse Zeit, z.B. 6 Sec. erfordert, kommt es vor, daß der zuerst geschnittene dünne Bereich stärker zurückspringt als der zuletzt geschnittene. Gemäß einer Ausgestaltung der Erfindung wird demzufolge der zuerst geschnittene dünne Bereich stärker vorgereckt als der zuletzt geschnittene. Es ist zweckmäßig nach der Bildung der Stoßzusammensetzung der beiden Materialenden den Überlappungsbereich mittels einer Rollvorrichtung anzurollen, wobei insbesondere geringfügige Wandstärkenschwankungen aufgrund der zusätzlichen Überlappungslänge im Bereich der Bahnkanten ausgeglichen bzw. geglättet werden.

Ein bevorzugtes Anwendungsgebiet der Erfindung ist die Erzeugung eines geschlossenen Rings für einen Seitenwandgummi eines Reifenrohlings. Weiterhin kann die Erfindung bei einem Laufstreifengummi eines Fahrradreifens angewandt werden. EineVorrichtung zur Durchführung des Verfahrens zeichnet sich dadurch aus, daß eine an sich bekannte Transportvorrichtung in der Weise modifiziert wird, daß zumindest die Elemente zum Erfassen der Materialbahn in den dünnen Querschnittsbereichen als Kraftübertragungselemente in Längsrichtung der Materialbahn steuerbar verschiebbar sind. Durch diese Verschiebbarkeit relativ zu den Elementen, die die Materialbahn in den dickeren Bereichen erfassen, wird das Vorrecken des vorderen Materialendes im Bereich der dünnen Zonen um ein genau definiertes Maß gewährleistet. Die Kraftübertragungselemente können z.B. mit Vakuumsaugnäpfen ausgestattet sein, alternativ aber auch mit Reckdornen oder Nadelkränzen. Selbstverständlich sind auch Kombinationen dieser Elemente möglich. Nach einer bevorzugten Ausführungsform ist die Vorrichtung als Tandemanordnung ausgebildet, bei der die Elemente zum Erfassen des vorderen Endes einer Materialbahn in zwei hintereinander liegenden Reihen angeordnet sind.

Nachfolgend wird die Erfindung anhand einer Zeichnung näher erläutert.

Es zeigt in schematischer Darstellung
- Fig. 1: den Anfangsbereich einer Materialbahn mit einem verzerrungsfreien Trennschnitt in einer Draufsicht,
- Fig. 1a: die Materialbahn mit einer darüber angeordneten Manipuliervorrichtung in Ruhestellung, jeweils in einer Seitenansicht,
- Fig. 1b: die Materialbahn mit der Manipuliervorrichtung in Arbeitsstellung in einer Vorderansicht,
- Fig. 2: den Anfangsbereich der Materialbahn mit einer zurückgesprungenen Schnittkante in einer Draufsicht,
- Fig. 2a: die Materialbahn der Fig. 2 mit der Manipuliervorrichtung in Arbeitsstellung, jeweils in Seitenansicht,
- Fig. 3: die Materialbahn der Fig. 2 mit aufgesetzten Saugnäpfen, jedoch mit vorgereckten Kanten in einer Draufsicht,
- Fig. 3a: die Materialbahn der Fig. 3 und die betätigte Manipuliervorrichtung, jeweils in einer Seitenansicht,
- Fig. 4: eine Materialbahn mit einem verzerrungsfreien Trennschnitt und mit aufgesetzten Saugnäpfen in einer Draufsicht,
- Fig. 4a: die Materialbahn der Fig. 4 und die Manipuliervorrichtung in Arbeitsstellung, jeweils in einer Seitenansicht,
- Fig. 5: die Materialbahn der Fig. 4 jedoch mit betätigten Saugnäpfen und mit vorgereckten Kanten in einer Draufsicht,
- Fig. 5a: die Materialbahn der Fig. 5 und die Manipuliervorrichtung in Arbeitsstellung, jeweils in einer Seitenansicht,
- Fig. 6: eine Materialbahn im Bereich der Stoßzusammensetzung mit zusätzlich überlappten Dünnzonen in einer Draufsicht,
- Fig. 6a: die Materialbahn der Fig. 6 in einer Seitenansicht.

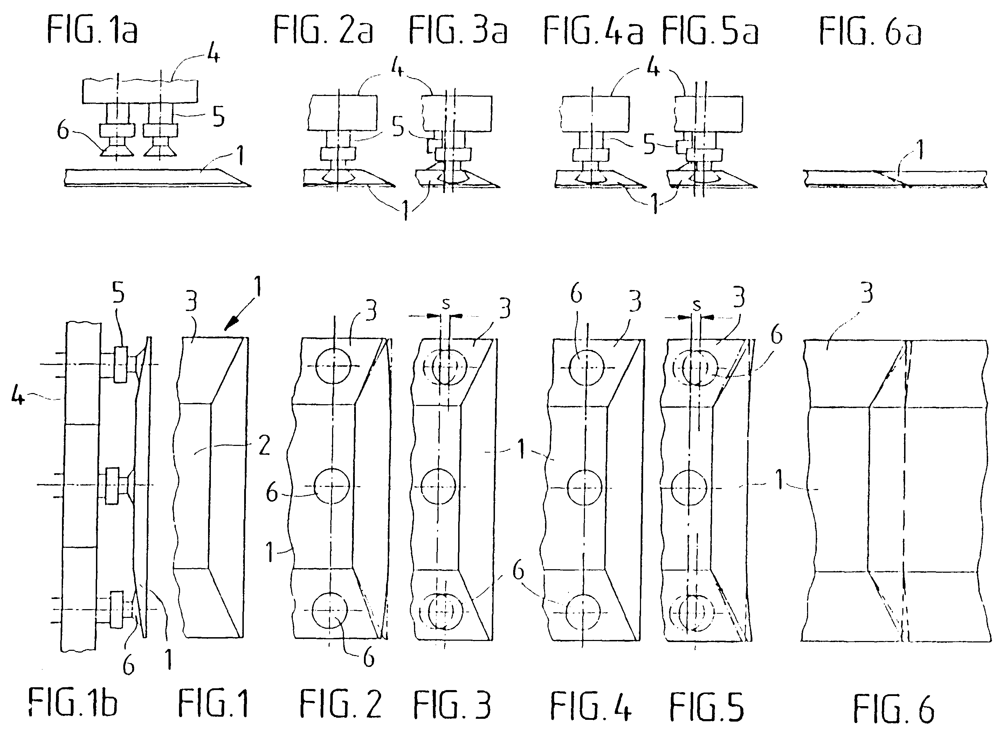

In Fig. 1 ist der Anfangsbereich einer Materialbahn 1 aus Gummi oder gummiähnlichen Kunsstoffen in einer Draufsicht dargestellt. Zur sprachlichen Vereinfachung soll im Rahmen dieser Anmeldung unter Gummi bzw. gummiähnlichem Kunststoff inbesondere auch solcher in unvulkanisiertem Zustand verstanden werden, wie er bei der Herstellung von Reifenrohlingen verarbeitet wird. Man spricht dann vom plastischen Zustand im Gegensatz zum elastischen Zustand nach der Vulkanisation. Die Materialbahn 1 hat einen im wesentlichen trapezförmigen Querschnitt mit einer relativ dicken Mittelzone 2 und mit spitz auslaufenden Seitenkanten 3. Am vorderen Ende ist die Materialbahn 1 mit einem verzerrungsfreien Trennschnitt in Form eines Schrägschnitts versehen. Unter einem Schrägschnitt wird hierbei eine von einem Vertikalschnitt abweichende Schnittebene verstanden.

Fig. 1a zeigt die Materialbahn 1 sowie als Vorrichtung zur Durchführung des Verfahrens eine Manipuliervorrichtung 4 in Form einer Vakuumtransporteinrichtung, die sich in Ruhestellung befindet. In Fig. 1b befindet sich die Manipuliervorrichtung 4 in Arbeitsstellung, in der sie das vordere Ende der Materialbahn 1 ergriffen hat.

Die Manipuliervorrichtung 4 weist Elemente 5 auf, die zum Erfassen der Materialbahn 1 mit Saugnäpfen 6 versehen sind und die zum Teil als Kraftübertragungselemente ausgebildet sind, indem sie in Längsrichtung der Materialbahn 1 steuerbar verschiebbar sind. In dem dargestellten Beispiel liegen die Elemente 5 in sogenannter Tandem-Anordnung vor, d.h. sie sind in zwei hintereinander angeordneten Reihen installiert, wobei sich in jeder Reihe drei Elemente befinden. Das mittlere Element 5 einer jeden Reihe ist ortsfest, d.h. unverschiebbarin Längsrichtung der Materialbahn 1 angeordnet, während die seitlichen Elemente 5 als Kraftübertragungselemente verschiebbar sind. Der Abstand der Elemente in Querrichtung der Materialbahn 1 ist so gewählt, daß die mittleren Elemente 5 die Materialbahn in der dicken Mittelzone 2 erfassen, während die seitlichen Kraftübertragungselemente 5 die Materialbahn 1 in den Bereichen der dünneren Seitenkanten 3 erfassen. Die Saugnäpfe 6 können einen Durchmesser von etwa 15 mm aufweisen, während der Abstand der beiden Tandemreihen ca. 20 mm betragen kann.

In Fig. 2 ist eine Materialbahn 1 mit aufgesetzten Saugnäpfen 6 dargestellt, bei der jedoch die Schnittkante gegenüber einem verzerrungsfreien Trennschnitt im Bereich der dünn auslaufenden Seitenkanten 3 zurückgesprungen ist. Das Maß des Zurückspringens hängt zum einen von der Qualität der Kautschukmischung der Materialbahn und zum anderen von der Zeit nach Anbringung des Trennschnitts ab und liegt in der Praxis bei Gummiprofilen für den Reifenaufbau in der Größenordnung von 2 mm. Fig. 2a zeigt die Materialbahn 1 der Fig. 2 in einer Seitenansicht mit der Vorderhälfte der aufgesetzten Manipuliervorrichtung 4. Der Übergang von der Fig. 2 zur Fig. 3 stellt den Kerngedanken des erfindungsgemäßen Verfahrens dar. Während die mittleren Elemente 5 in den Figuren 2 und 3 ortsfest auf der Materialbahn angeordnet sind, werden die seitlichen Elemente 5 mit den Saugnäpfen 6 um einen Kompensationsweg s nach vorne verschoben, so daß die Materialbahn 1 im Bereich der zurückgesprungenen Seitenkanten vorgereckt wird. Der Kompensationsweg s und damit das Maß des Vorreckens kann in der Regel 2 bis 4 mm betragen. In Fig. 3a sind die beschriebenen Verhältnisse gemäß Fig. 3 in einer Seitenansicht dargestellt. Man erkennt, daß die seitlichen Kraftübertragungselemente 5 gegenüber den mittleren Elementen 5 in Längsrichtung der Materialbahn 1 nach vorne verschoben sind. In den Figuren 4 und 5 wird eine weitere Variante des erfindungsgemäßen Verfahrens beschrieben. Dabei wird gemäß Fig. 4 von einer Materialbahn 1 ausgegangen, die an der Vorderseite einen verzerrungsfreien Trennschnitt aufweist. Fig. 4a zeigt diese Materialbahn 1 und die aufgesetzte Manipuliervorrichtung 4 in einer Seitenansicht. Beim Übergang zu Fig. 5 wurden widerum die seitlichen Kraftübertragungselemente 5 um einen Kompensationsweg s nach vorne verschoben, so daß die Materialbahn 1 im Bereich der Seitenkanten 3 vorgereckt wird. Fig. 5a zeigt die entsprechende Stellung der Manipuliervorrichtung 4 in einer Seitenansicht. Auch hier kann der Kompensationsweg in der Regel 2 bis 4 mm betragen.

Nachfolgend wird das erfindungsgemäße Verfahren bei einer Materialbahn 1 beschrieben, die auf einer üblichen Wickeltrommel zu einem Seitenwandgummi in Form eines geschlossenen Rings für einen Reifenrohling gefügt wird. Dabei kann bezüglich der vorderen Schnittkante der Materialbahn 1 von einem Zustand gemäß Fig. 2 (Schnittkante zurückgesprungen) oder von einem Zustand gemäß Fig. 4 (verzerrungsfreier Trennschnitt) ausgegangen werden. Beide Varianten kommen in der Produktion vor.

Das vordere Ende der Materialbahn 1 wird von den Saugnäpfen 6 der heruntergefahrenen Manipuliervorrichtung 4 erfaßt und in Richtung der nicht dargestellten Wickeltrommel transportiert. Möglichst kurz vor dem Ablegen des vorderen Endes der Materialbahn 1 auf der Wickeltrommel wird die Materialbahn 1 in den Bereichen verdünnter Wandstärke in der vorstehend beschriebenen Weise vorgereckt (vgl. Fig. 3 und Fig. 5). Nach dem Ablegen des vorderen Endes der Materialbahn 1 auf der Wickeltrommel wird dieses in dem vorgereckten Zustand fixiert.Dies kann grundsätzlich von oben oder auch von unten geschehen. Bei einer Fixierung von unten ist es üblich innerhalb der Wickeltrommel eine Saugvorrichtung anzubringen. Anschließend wird die Materialbahn um die Wickeltrommel herumgelegt bis ungfähr eine Umfangslänge erreicht ist. Erst dann wird der Trennschnitt am hinteren Ende des Seitenwandgummis an der Materialbahn 1 vorgenommen, so daß unmittelbar danach, d.h. ca. 2 Sekunden nach Beendigung des Trennschnitts, die Stoßzusammenfügung zu einem geschlossenen Ring erfolgt. Diese Stoßzusammenfügung ist in den Figuren 6 und 6a dargestellt. Es ergibt sich somit eine Stoßzusammenfügung erhöhter Haltbarkeit, vor allem in den empfindlichen verdünnten Seitenkantenbereichen aufgrund der dort erzeugten zusätzlichen Überlappungslänge. Schließlich wird die Stoßzusammenfügung insbesondere in den beiden verdünnten Bereichen mittels einer üblichen Rolleinrichtung angerollt, so daß eventuell vorhandene Dickenschwankungen in der Wandstärke ausgeglichen werden können. Bei dem beschriebenen Verfahren wird das vordere Ende der Materialbahn ca. 6 Sekunden vor der Bildung der Stoßzusammenfügung geschnitten, während der Trennschnitt am hinteren Ende lediglich 2 Sekunden vor der Zusammenfügung erfolgt, so daß nur das vordere Ende der Materialbahn 1 genügend Zeit hat, in den verdünnten Bereichen zurückzuspringen.

Es sollte angemerkt werden, daß das erfindungsgemäße Verfahren nicht nur bei der Erzeugung von geschlossenen Ringen auf einer Wickeltrommel anwendbar ist, sondern auch bei solchen Fertigungsprozessen, bei denen zwei Enden einer Materialbahn 1 mit verdünnten Bereichen in einer Ebene zusammengefügt werden müssen.

## Patentansprüche

1. Verfahren zum Zusammenfügen von Materialenden bei Materialbahnen aus Gummi oder gummiähnlichen Kunststoffen mit dünnen Querschnittsbereichen, insbesondere dünne Materialkanten in Form von spitz auslaufenden Seitenkanten
**dadurch gekennzeichnet,**
daß zumindest das zuerst mit einem Trennschnitt versehene Materialende möglichst kurz vor der Stoßzusammensetzung der beiden Enden in den Bereichen verdünnter Wandstärke um ein definiertes Maß vorgereckt wird, wobei
das zuerst mit einem Trennschnitt versehene Materialende in den Bereichen der Seitenkanten um bis zu 4 mm vorgereckt wird und daß anschließend die Stoßzusammensetzung der beiden Enden unter Fixierung des vorgereckten Endes mit zusätzlichen Überlappungslängen in den beiden Bereichen der Seitenkanten erfolgt.

2. Verfahren nach Anspruch 1, dadurch gekennzeichnet, daß das Vorrecken in der Weise geschieht, daß der in Querrichtung der Materialbahn zuerst geschnittene dünne Bereich stärker vorgereckt wird als die später geschnittenen.

3. Verfahren nach Anspruch 1 , dadurch gekennzeichnet, daß die Stoßzusammensetzung der beiden Materialenden mittels einer Rollvorrichtung angerollt wird.

4. Verfahren nach dem Anspruch 1, 2, oder 3, dadurch gekennzeichnet, daß es bei einem Seitenwandgummi eines Reifens angewandt wird, der auf einer Trommel zu einem geschlossenen Ring gefügt wird.

5. Verfahren nach den Ansprüchen 1, 2, oder 3, dadurch gekennzeichnet, daß es bei einem Laufstreifengummi eines Fahrradreifens angewandt wird, der auf einer Trommel zu einem geschlossenen Ring gefügt wird.

6. Vorrichtung zur Durchführung des Verfahrens nach Anspruch 1 mit mehreren Elementen (5) zum Erfassen des vorderen Endes einer Materialbahn (1) an verschiedenen Stellen in Querrichtung der Bahn (1), dadurch gekennzeichnet, daß zumindest die Elemente (5) zum Erfassen der Materialbahn in den dünnen Querschnittsbereichen als Kraftübertragungselemente steuerbar und untereinander unterschiedlich weit in Längsrichtung der Materialbahn (1) verschiebbar sind.

7. Vorrichtung nach Anspruch 6, dadurch gekennzeichnet, daß in Längsrichtung der Materialbahn (1) nur die Elemente (5) zum Erfassen der Materialbahn (1) in den dünnen Querschnittsbereichen steuerbar sind, während die anderen Elemente (5) ortsfest angeordnet sind.

8. Vorrichtung nach Anspruch 6 oder 7, dadurch gekennzeichnet, daß die Kraftübertragungselemente (5) mit Vakuumsaugnäpfen (6) ausgestattet sind.

9. Vorrichung nach Anspruch 6 oder 7, dadurch gekennzeichnet, daß die Kraftübertragungselemente (5) mit Reckdornen oder Nadelkränzen ausgestattet sind.

10. Vorrichtung nach Anspruch 6, dadurch gekennzeichnet, daß die Elemente (5) zum Erfassen der Materialbahn (1) in einfacher oder Tandem-Anordnung vorliegen.

## Claims

1. Method of joining ends of material for webs of material which are formed from rubber or rubber-like plastics material and have thin cross-sectional regions, more especially thin material edges in the form of lateral edges which taper to a point, characterised in that at least the end of material initially provided with a severance cut is prestretched by a specific amount as shortly as possible before the butt-joining of the two ends in the regions of reduced wall thickness, the end of material which is initially provided with a severance cut being prestretched by up to 4 mm in the regions of the lateral edges, and in that subsequently the butt-joining of the two ends is effected in the two regions of the lateral edges with additional overlapping lengths so as to secure the prestretched end.

2. Method according to claim 1, characterised in that the prestretching occurs in such a manner that the thin region, which is initially cut when viewed with respect to the transverse direction of the web of material, is prestretched more intensively than the subsequently cut regions.

3. Method according to claim 1, characterised in that the butt joint between the two ends of the material is rolled by means of a rolling device.

4. Method according to claims 1, 2 or 3, characterised in that it is used for a sidewall rubber of a tyre, which is joined on a drum to form a closed ring.

5. Method according to claims 1, 2 or 3, characterised in that it is used for a tread strip rubber of a motorcycle tyre, which is joined on a drum to form a closed ring.

6. Apparatus for accomplishing the method according to claim 1, having a plurality of elements (5) for gripping the front end of a web of material (1) at various locations, when viewed with respect to the transverse direction of the web (1), characterised in that at least the elements (5) for gripping the web of material in the thin cross-sectional regions are controllable as power-transmitting elements and are displaceable in the longitudinal direction of the web of material (1) to a variable extent beneath one another.

7. Apparatus according to claim 6, characterised in that, when viewed with respect to the longitudinal direction of the web of material (1), only the elements (5) for gripping the web of material (1) in the thin cross-sectional regions are controllable, while the other elements (5) are disposed in a stationary manner.

8. Apparatus according to claim 6 or 7, characterised in that the power-transmitting elements (5) are provided with vacuum suction cups (6).

9. Apparatus according to claim 6 or 7, characterised in that the power-transmitting elements (5) are provided with stretching spindles or needle rings.

10. Apparatus according to claim 6, characterised in that the elements (5) for gripping the web of material (1) are provided in a single or tandem disposition.

## Revendications

1. Procédé pour réunir des extrémités de bandes de matériau formées de caoutchouc ou de matières plastiques analogues au caoutchouc et comportant des parties minces en coupe transversale, notamment des bords minces du matériau sous la forme de bords latéraux se terminant sous une forme pointue, caractérisé en ce qu'on applique au moins à l'extrémité du matériau, qui est pourvue tout d'abord d'une coupe de séparation, un préétirage à un degré défini, à un instant aussi proche que possible avant la réunion par aboutement des deux extrémités dans les parties ayant une épaisseur de paroi amincie, et selon lequel on applique un préétirage, d'une valeur atteignant jusqu'à 4 mm, à l'extrémité du matériau, qui est pourvue tout d'abord d'une coupe de séparation, dans les parties des bords latéraux, et ensuite on effectue la réunion par aboutement des deux extrémités moyennant la fixation de l'extrémité à étirer avec des longueurs de chevauchement supplémentaires dans les deux zones des bords latéraux.

2. Procédé selon la revendication 1, caractérisé en ce que le préétirage s'effectue de telle sorte que la partie mince, qui est tout d'abord coupée dans la direction transversale de la bande de matériau, est étirée plus fortement que les parties découpées ultérieurement.

3. Procédé selon la revendication 1, caractérisé en ce qu'on applique un laminage à l'assemblage obtenu par liaison par aboutement des deux extrémités du matériau à l'aide d'un dispositif à rouleau.

4. Procédé selon la revendication 1, 2 ou 3, caractérisé en ce qu'on le met en oeuvre dans le cas d'un caoutchouc de paroi latérale d'un pneumatique, qui est assemblé sur un tambour pour former un anneau fermé.

5. Procédé selon les revendications 1, 2 ou 3, caractérisé en ce qu'on le met en oeuvre dans le cas d'un caoutchouc d'une bande d'enroulement d'un pneumatique de bicyclette, qui est assemblé sur un tambour pour former un anneau formé.

6. Dispositif pour la mise en oeuvre du procédé selon la revendication 1, comprenant plusieurs éléments (5) servant à détecter l'extrémité avant d'une bande de matériau (1) en différents emplacements dans la direction transversale de la bande (1), caractérisé en ce qu'au moins les éléments (5) servant à saisir la bande de matériau sont déplaçables dans les régions minces en coupe transversale peuvent être commandés en tant qu'éléments de transfert de force et sont déplaçables entre eux sur des distances différentes dans la direction longitudinale de la bande de matériau (1).

7. Dispositif selon la revendication 6, caractérisé en ce que dans la direction longitudinale de la bande de matériau (1) seuls les éléments (5) servant à détecter la bande de matériau (1) dans les régions minces en coupe transversale peuvent être commandés alors que les autres éléments (5) sont disposés de façon fixe.

8. Dispositif selon la revendication 6 ou 7, caractérisé en ce que les éléments de transmission de force (5) sont équipés de ventouses (6).

9. Dispositif selon la revendication 6 ou 7, caractérisé en ce que les éléments de transmission de force (5) sont équipés de mandrins d'étirage ou de couronnes d'aiguilles.

10. Dispositif selon la revendication 6, caractérisé en ce que les éléments (5) servant à saisir la bande de matériau (1) sont présents selon une dispositif simple ou selon une disposition en tandem.
